# EUROPEAN PATENT SPECIFICATION

(11) **EP 2 407 660 B1**
(45) Date of publication and mention of the grant of the patent: **17.04.2019**
(21) Application number: 11172289.8
(22) Date of filing: 30.06.2011
(51) Int. Cl.: F02K 3/06, F01D 17/26, F02C 7/32

(54) **Auxiliary hydraulic power generation system**
Hydraulisches Hilfsenergieerzeugungssystem
Système de génération de puissance hydraulique auxiliaire

(30) Priority: 13.07.2010 US 834936
(43) Date of publication of application: 18.01.2012
(73) Proprietor: Hamilton Sundstrand Corporation, Windsor Locks, CT 06096-1010 (US)
(72) Inventor: Kandil, Magdy A., Rockford, IL Illinois 61107 (US); Jacques, David L., Caledonia, IL Illinois 61011 (US)
(74) Representative: Dehns

(56) References cited:
- GB-A- 2 216 603
- US-A- 5 687 561
- US-A- 5 694 765
- US-A- 5 845 483
- US-A1- 2006 137 355

## Description

### BACKGROUND

The present application relates to a gas turbine engine, and more particularly to an auxiliary hydraulic power generation system therefor.

In modern turbofan powered aircraft, an emergency power source is required for control of flight surfaces in the highly unlikely event of a total loss of the availability of the primary power sources; i.e., engine driven hydraulic pumps and/or engine driven electrical generators. For relatively small aircraft, this power is provided by the energy stored in aircraft batteries. For relatively larger aircraft, a ram air turbine (RAT) with an integral generator or auxiliary hydraulic pump is provided for deployment in an emergency situation.

GB 2216603 A discloses a power takeoff from a low speed spool of a gas turbine engine to drive an emergency power unit.

US 5694765 A discloses a multispool gas turbine engine for an aircraft, which includes a transmission system to transfer power between relatively rotatable engine spools.

### SUMMARY

An auxiliary hydraulic power generation system for a gas turbine engine according to an exemplary aspect of the present disclosure includes a first spool including a turbine. A fan is coupled to the first spool, the fan being operable to drive the first spool in a windmill condition in which the turbine fails to provide rotational drive to the fan. The auxiliary hydraulic power generation system is characterised in that it further comprises an auxiliary variable displacement hydraulic pump for being selectively driven by said first spool in said windmill condition for providing a flow of pressurized fluid to an aircraft hydraulic system and augmenting a hydraulic power source; a speed up gearbox between said first spool and said auxiliary variable displacement hydraulic pump; and a coupling between said speed up gearbox and said auxiliary variable displacement hydraulic pump for selectively driving the auxiliary variable displacement hydraulic pump with said first spool in the windmill condition.

A method of hydraulic power generation for a gas turbine engine according to an exemplary aspect of the present disclosure includes engaging a coupling to couple a low spool to an auxiliary variable displacement hydraulic pump to permit flow of pressurized fluid from the auxiliary hydraulic pump to an aircraft hydraulic system for augmenting a hydraulic power source; wherein the coupling couples the low spool to the auxiliary variable displacement hydraulic pump in response to the low spool entering a windmill condition.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic sectional view through a gas turbine engine along the engine longitudinal axis; and
Figure 2 is a schematic view of a hydraulic power generation system.

### DETAILED DESCRIPTION

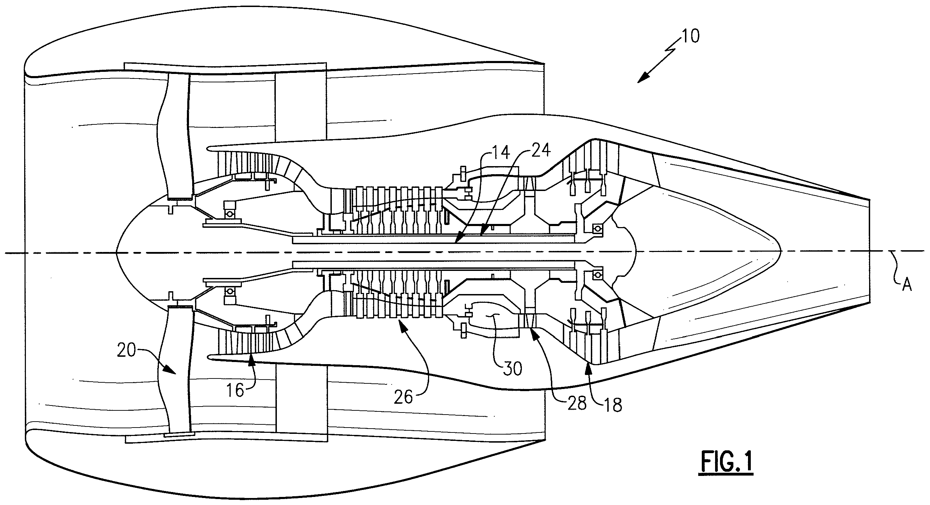

Figure 1 illustrates a general schematic view of a gas turbine engine 10 such as a gas turbine engine for propulsion. While a two spool high bypass turbofan engine is schematically illustrated in the disclosed non-limiting embodiment, it should be understood that the disclosure is applicable to other gas turbine engine configurations, including, for example, gas turbines for power generation, turbojet engines, low bypass turbofan engines, turboshaft engines, etc.

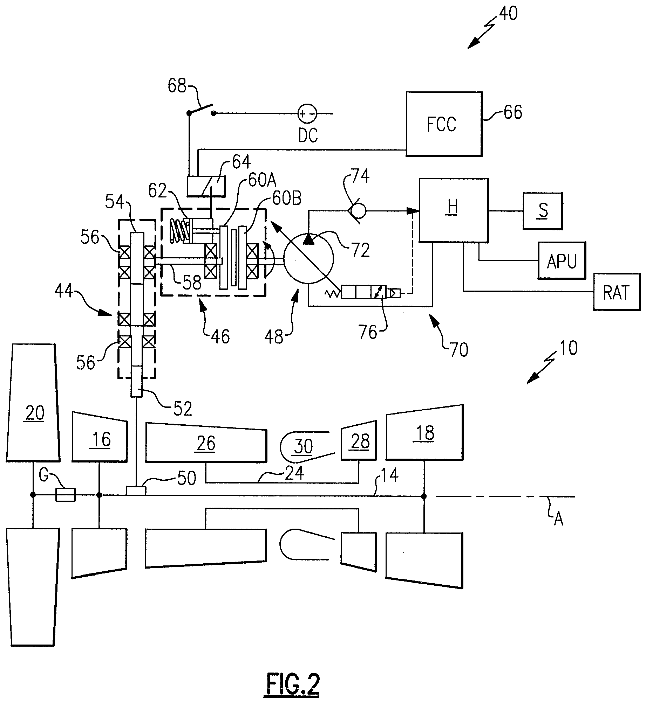

The engine 10 includes a core engine section that houses a low spool 14 and high spool 24. The low spool 14 includes a low pressure compressor 16 and a low pressure turbine 18. A fan 20 is coupled to the low spool 14 either directly or through a geared architecture G (Figure 2). The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

Air compressed in the compressor 16, 26 is mixed with fuel, burned in the combustor 30, and expanded in turbines 18, 28. The air compressed in the compressors 16, 18 and the fuel mixture expanded in the turbines 18, 28 may be referred to as a hot gas stream along a core gas path. The turbines 18, 28, in response to the expansion, drive the compressors 16, 26 and fan 20 either directly or through a geared architecture.

With reference to Figure 2, a hydraulic power generation system 40 utilizes the wind-milling condition of the fan 20 to power an aircraft hydraulic system H. The hydraulic power generation system 40 generally includes a speed up gearbox 44, a coupling 46 and an auxiliary hydraulic pump 48. The hydraulic power generation system 40 utilizes the wind-milling condition of the fan 20 which is connected to the low spool 14 - typically referred to as an N1 shaft. The system 40 is selectively operable to maintain the desired load pressure for the aircraft hydraulic system H during the windmill condition. The system 40 may also be also used as emergency power to replace or assist a typical Ram Air Turbine (RAT) to reduce weight, size and space required for stowing the RAT.

In a windmill condition, the low spool 14 rotates in response to the fan 20 being driven by airflow but the low pressure turbine section 18 does not provide rotational input. A windmill condition may occur during any number of situations, such as a stall or an ignition or combustion failure in the low pressure turbine section 18.

The speed up gearbox 44 generally includes a low spool gear 50 engaged with a gear shaft 52 which, in turn, is engaged with a pinion 54. The gear shaft 52 and the pinion 54 may be respectively supported by bearings 56 within the speed up gearbox 44. A quill shaft 58 driven by the gearbox 44 connects the pinion 54 to drive the input side of the coupling 46. It should be understood that various gear arrangements may alternatively or additionally be provided.

The coupling 46, such as a centrifugal clutch, is arranged between the speed up gearbox 44 and the auxiliary hydraulic pump 48 to selectively couple the low spool 14 thereto. In one example, the rotational speed of the low spool 14 under normal engine operating conditions may be approximately eight times the windmill condition speed. As a result, it may be desirable for the coupling 46 to decouple the low spool 14 from the auxiliary hydraulic pump 48 above a predetermined rotational speed. As a result, the auxiliary hydraulic pump 48 parameters can be selected to provide desired performance during the lower rotational speeds experienced during the windmill condition.

The coupling 46 may include a set of pressure plates 60A connected to the quill shaft 58, a spring loaded piston 62, and a corresponding set of plates 60B. One side of the spring loaded piston 62 is pressurized via a control valve 64 such as a solenoid operated valve which may be energized by the aircraft flight control computer (FCC) 66 or other control such as a manual pilot-operated switch 68 whenever auxiliary hydraulic power is required. The control operates to depressurize one side of the spring loaded piston 62 to connect the quill shaft 58 to the auxiliary hydraulic pump 48 through the coupling 46.

The coupling 46 is operable to off load the low spool 14 when the hydraulic power demand does not require utilization of the system 40 and disconnect the auxiliary hydraulic pump 48 to maximize operational life of the auxiliary hydraulic pump 48 which is typically maintained in a dormant mode for the majority of its life.

The low spool 14 drives the auxiliary hydraulic pump 48 such as a variable displacement pressure compensated pump through the coupling 46 and the speed up gearbox 44 to operate at speeds higher than the low spool 14 to maximize the volumetric delivery of pressurized fluid. The auxiliary hydraulic pump 48 is a variable displacement hydraulic pump and may include a fluid control circuit 70 (illustrated schematically) which is integrated into or separate from the auxiliary hydraulic pump 48 so as to increase or decrease displacement in response to load flow demand to thereby maintain the desired load pressure for the aircraft hydraulic system H. The fluid control circuit 70 operates to sense the load pressure and adjusts pump displacement to maintain constant pressure regardless of the flow demand from the hydraulic system H.

In one non-limiting embodiment, a discharge port 72 of the auxiliary hydraulic pump 48 is connected to the aircraft hydraulic system H through a check valve 74 to permit flow of pressurized fluid only from the auxiliary hydraulic pump 48 to the hydraulic system H. It should be understood that various flow controls may alternatively or additionally be provided.

In another non-limiting embodiment, the auxiliary hydraulic pump 48 may include an off-loading valve 76 to maintain the auxiliary hydraulic pump 48 at minimum displacement during start up or when the wind-milling condition generated power is insufficient to prevent a stalling condition.

The system 40 thereby uses the wind-milling condition of a non-operating engine to augment other hydraulic power sources (illustrated schematically at S) such as engine driven pumps or electric motor driven pumps so as to, for example: reduce the size and weight of power sources; reduce power extract from the high spool of the operating engine(s) or APU; reduce electric power consumption from operating engine(s) or APU driven generator otherwise required for electric motor driven pumps (EMPs); and reduce weight, size and space required for stowage of other emergency power systems such as a ram air turbine (RAT).

It should be understood that relative positional terms such as "forward," "aft," "upper," "lower," "above," "below," and the like are with reference to the normal operational attitude of the vehicle and should not be considered otherwise limiting.

The foregoing description is exemplary rather than defined by the limitations within. Many modifications and variations of the present invention are possible in light of the above teachings. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. An auxiliary hydraulic power generation (40) system for a gas turbine engine comprising:
a first spool (14) including a turbine (18); and
a fan (20) coupled to said first spool, said fan being operable to drive said first spool in a windmill condition in which said turbine fails to provide rotational drive to said fan;
**characterised in that** the auxiliary hydraulic power generation system further comprises:
an auxiliary variable displacement hydraulic pump (48) for being selectively driven by said first spool in said windmill condition for providing a flow of pressurized fluid to an aircraft hydraulic system (H) and augmenting a hydraulic power source;
a speed up gearbox (44) between said first spool (14) and said auxiliary variable displacement hydraulic pump (48); and
a coupling (46) between said speed up gearbox (44) and said auxiliary variable displacement hydraulic pump for selectively driving the auxiliary variable displacement hydraulic pump with said first spool in the windmill condition.

2. The system as recited in claim 1, wherein said first spool (14) is a low pressure spool.

3. The system as recited in claim 1, wherein said coupling (46) includes a clutch.

4. The system as recited in any preceding claim, wherein a discharge port (72) of said auxiliary variable displacement hydraulic pump (48) is connected to an aircraft hydraulic system (H) through a check valve (74) to permit flow of pressurized fluid only from said auxiliary variable displacement hydraulic pump to said aircraft hydraulic system.

5. The system as recited in any preceding claim, further comprising an off-loading valve (76) to maintain said auxiliary variable displacement hydraulic pump (48) at a minimum displacement during start up.

6. The system as recited in any one of claims 1 to 4, further comprising an off-loading valve (76) to maintain said auxiliary variable displacement hydraulic pump (48) at a minimum displacement when windmill generated power is insufficient to prevent a stalling condition.

7. The system as recited in any preceding claim, wherein said hydraulic power source is an engine driven pump.

8. The system as recited in any one of claims 1 to 6, wherein said hydraulic power source is an electric motor driven pump.

9. A method of auxiliary hydraulic power generation for a gas turbine engine comprising:
engaging a coupling (46) to couple a low spool (14) of a turbine engine to an auxiliary variable displacement hydraulic pump (48) to provide a flow of pressurized fluid between the auxiliary variable displacement hydraulic pump to an aircraft hydraulic system (H), wherein the coupling (46) couples the low spool (14) to the auxiliary variable displacement hydraulic pump (48) in response to the low spool entering a windmill condition.

10. The method as recited in claim 9, wherein the coupling (46) couples the low spool (14) to the auxiliary variable displacement hydraulic pump (48) in response to a manually activated condition.

11. The method as recited in claim 9 or 10, further comprising maintaining the auxiliary variable displacement hydraulic pump (48) at a minimum displacement.

12. The method as recited in claim 9 or 10, further comprising maintaining the auxiliary variable displacement hydraulic pump (48) at a minimum displacement when windmill generated power is insufficient to prevent a stalling condition to augment a hydraulic power source.

## Patentansprüche

1. Hydraulisches Hilfsenergieerzeugungssystem (40) für ein Gasturbinentriebwerk, umfassend:
eine erste Welle (14), die eine Turbine (18) umfasst; und
ein Gebläse (20), das mit der ersten Welle verbunden ist, wobei das Gebläse betrieben werden kann, um die erste Welle in einem Autorotationszustand anzutreiben, in dem die Turbine dem Gebläse keinen Drehantrieb bereitstellt;
**dadurch gekennzeichnet, dass** das hydraulische Hilfsenergieerzeugungssystem ferner Folgendes umfasst:
eine hydraulische Hilfsverstellpumpe (48), die selektiv von der ersten Welle in dem Autorotationszustand angetrieben werden kann, um einen Strom von mit Druck beaufschlagtem Fluid an ein Hydrauliksystem (H) des Luftfahrzeugs zu liefern und eine Hydraulik-Energiequelle zu verstärken;
ein Übersetzungsgetriebe ins Schnelle (44) zwischen der ersten Welle (14) und der hydraulischen Hilfsverstellpumpe (48); und
eine Verbindung (46) zwischen dem Übersetzungsgetriebe ins Schnelle (44) und der hydraulischen Hilfsverstellpumpe zum selektiven Antreiben der hydraulischen Hilfsverstellpumpe mit der ersten Welle im Autorotationszustand.

2. System nach Anspruch 1, wobei die erste Welle (14) eine Niederdruckwelle ist.

3. System nach Anspruch 1, wobei die Verbindung (46) eine Kupplung umfasst.

4. System nach einem der vorstehenden Ansprüche, wobei eine Ausflussöffnung (72) der hydraulischen Hilfsverstellpumpe (48) mit einem Hydrauliksystem (H) des Luftfahrzeugs über ein Rückschlagventil (74) verbunden ist, um den Strom des mit Druck beaufschlagten Fluids nur von der hydraulischen Hilfsverstellpumpe zu dem Hydrauliksystem des Luftfahrzeugs zuzulassen.

5. System nach einem der vorstehenden Ansprüche, ferner umfassend ein Druckentlastungsventil (76), um die hydraulische Hilfsverstellpumpe (48) bei einer minimalen Verdrängung während des Anfahrens zu halten.

6. System nach einem der Ansprüche 1 bis 4, ferner umfassend ein Druckentlastungsventil (76), um die hydraulische Hilfsverstellpumpe (48) bei einer minimalen Verdrängung zu halten, wenn die durch Autorotation erzeugte Energie nicht ausreicht, um einen Zustand des Strömungsabrisses zu verhindern.

7. System nach einem der vorstehenden Ansprüche, wobei die Hydraulik-Energiequelle eine motorbetriebene Pumpe ist.

8. System nach einem der Ansprüche 1 bis 6, wobei die Hydraulik-Energiequelle eine von einem Elektromotor angetriebene Pumpe ist.

9. Verfahren der hydraulischen Hilfsenergieerzeugung für ein Gasturbinentriebwerk, umfassend:
Ineingriffbringen einer Verbindung (46), um eine Niederdruckwelle (14) eines Turbinentriebwerks mit einer hydraulischen Hilfsverstellpumpe (48) zu verbinden, um einen Strom von mit Druck beaufschlagtem Fluid zwischen der hydraulischen Hilfsverstellpumpe und einem Hydrauliksystem (H) eines Luftfahrzeugs bereitzustellen, wobei die Verbindung (46) die Niederdruckwelle (14) mit der hydraulischen Hilfsverstellpumpe (48) als Reaktion darauf, dass die Niederdruckwelle in einen Autorotationszustand eintritt, verbindet.

10. Verfahren nach Anspruch 9, wobei die Verbindung (46) die Niederdruckwelle (14) mit der hydraulischen Hilfsverstellpumpe (48) als Reaktion auf einen manuell aktivierten Zustand verbindet.

11. Verfahren nach Anspruch 9 oder 10, ferner umfassend das Halten der hydraulischen Hilfsverstellpumpe (48) bei einer minimalen Verdrängung.

12. Verfahren nach Anspruch 9 oder 10, ferner umfassend das Halten der hydraulischen Hilfsverstellpumpe (48) bei einer minimalen Verdrängung, wenn die durch Autorotation erzeugte Energie nicht ausreicht, um einen Zustand des Strömungsabrisses zu verhindern, um eine Hydraulik-Energiequelle zu verstärken.

## Revendications

1. Système de génération de puissance hydraulique auxiliaire (40) pour un turbomoteur à gaz comprenant :
un premier corps (14) comprenant une turbine (18) ; et
une soufflante (20) couplée audit premier corps, ladite soufflante pouvant être utilisée pour entraîner ledit premier corps dans un état de moulinet dans lequel ladite turbine ne parvient pas à fournir un entraînement en rotation à ladite soufflante ;
**caractérisé en ce que** le système de génération de puissance hydraulique auxiliaire comprend en outre :
une pompe hydraulique auxiliaire à cylindrée variable (48) destinée à être sélectivement entraînée par ledit premier corps dans ledit état de moulinet pour fournir un écoulement de fluide sous pression à un système hydraulique d'aéronef (H) et augmenter une source de puissance hydraulique ;
une transmission d'accélération (44) entre ledit premier corps (14) et ladite pompe hydraulique auxiliaire à cylindrée variable (48) ; et
un accouplement (46) entre ladite transmission d'accélération (44) et ladite pompe hydraulique auxiliaire à cylindrée variable pour entraîner sélectivement la pompe hydraulique auxiliaire à cylindrée variable avec ledit premier corps dans l'état de moulinet.

2. Système selon la revendication 1, dans lequel ledit premier corps (14) est un corps basse pression.

3. Système selon la revendication 1, dans lequel ledit accouplement (46) comprend un embrayage.

4. Système selon une quelconque revendication précédente, dans lequel un orifice de sortie (72) de ladite pompe hydraulique auxiliaire à cylindrée variable (48) est raccordé à un système hydraulique d'aéronef (H) par l'intermédiaire d'un clapet anti-retour (74) pour permettre l'écoulement de fluide sous pression uniquement de ladite pompe hydraulique auxiliaire à cylindrée variable vers ledit système hydraulique d'aéronef.

5. Système selon une quelconque revendication précédente, comprenant en outre une vanne d'évacuation (76) pour maintenir ladite pompe hydraulique auxiliaire à cylindrée variable (48) à une cylindrée minimale pendant le démarrage.

6. Système selon l'une quelconque des revendications 1 à 4, comprenant en outre une vanne d'évacuation (76) pour maintenir ladite pompe hydraulique auxiliaire à cylindrée variable (48) à une cylindrée minimale lorsque la puissance générée par moulinet est insuffisante pour éviter un état de décrochage.

7. Système selon une quelconque revendication précédente, dans lequel ladite source de puissance hydraulique est une pompe entraînée par moteur.

8. Système selon l'une quelconque des revendications 1 à 6, dans lequel ladite source de puissance hydraulique est une pompe entraînée par moteur électrique.

9. Procédé de génération de puissance hydraulique auxiliaire pour un turbomoteur à gaz comprenant :
la mise en prise d'un accouplement (46) pour accoupler un corps basse pression (14) d'un turbomoteur avec une pompe hydraulique auxiliaire à cylindrée variable (48) pour fournir un écoulement de fluide sous pression entre la pompe hydraulique auxiliaire à cylindrée variable et un système hydraulique d'aéronef (H), dans lequel l'accouplement (46) accouple le corps basse pression (14) avec la pompe hydraulique auxiliaire à cylindrée variable (48) en réponse au passage du corps basse pression dans un état de moulinet.

10. Procédé selon la revendication 9, dans lequel l'accouplement (46) accouple le corps basse pression (14) avec la pompe hydraulique auxiliaire à cylindrée variable (48) en réponse à un état activé manuellement.

11. Procédé selon la revendication 9 ou 10, comprenant en outre le maintien de la pompe hydraulique auxiliaire à cylindrée variable (48) à une cylindrée minimale.

12. Système selon la revendication 9 ou 10, comprenant en outre le maintien de la pompe hydraulique auxiliaire à cylindrée variable (48) à une cylindrée minimale lorsque la puissance générée par moulinet est insuffisante pour éviter un état de décrochage pour augmenter une source hydraulique de puissance.
